# EUROPEAN PATENT APPLICATION

(11) **EP 4 210 315 A1**
(43) Date of publication of application: **12.07.2023**
(21) Application number: 22315004.6
(22) Date of filing: 07.01.2022
(51) Int. Cl.: H04N 1/60, H04N 1/64

(54) **METHOD OF GENERATING A PALETTE FOR USE IN A PRINTING PROCESS AND PRINTING METHOD**

(71) Applicant: ASSA ABLOY AB, 107 23 Stockholm (SE); HID Global CID SAS, 92150 Suresnes (FR); Université Jean Monnet Saint-Étienne, 42100 Saint Étienne (FR); Centre national de la recherche scientifique, 75016 Paris (FR)
(72) Inventor: Ayala, Stéphane, 1610 Oron-la-Ville (CH); Destouches, Nathalie, 42000 Saint-Etienne (FR); Hébert, Mathieu, 69001 Lyon (FR); Dalloz, Nicolas, 92150 Suresnes (FR)
(74) Representative: Kramer Barske Schmidtchen Patentanwälte PartG mbB

(57) **Abstract**

A method of generating a reduced palette for use in a printing process is disclosed. In the method, a plurality of images (12) obtainable by varying printing parameters of the printing apparatus (100) are printed, and color values of the same are measured. Those color values that contribute the most to the gamut volume of the images are determined and used to form the reduced palette. This reduced palette can be used in a halftoning process to print a given input image using only a selected number of different printing parameters. The method is used, for example, for a laser marking apparatus used for personalizing security documents, and can also be used for multiplexed images.

## Description

### Technical Field

The present disclosure generally relates to printing techniques, in particular, to a method of generating a palette for use in a printing process, for example, a laser marking process in the field of identification documents, and a subsequent printing method using such a palette.

### Background

Generally, the color palette with which images are printed, for example, using an inkjet printer, is constrained by the inks that are available (for example, cyan, magenta, yellow and black). In applications such as physical identification documents, it is common to use printing techniques such as laser marking, because this may allow for obtaining image features inside a polycarbonate substrate rather on a surface of the substrate. When a laser is used to produce colors, it may only be possible to reproduce a limited range of colors, and the link between the laser parameters and the produced colors is not trivial.

WO 2014/075994 A1 discloses a method for laser-structuring a nanoparticle network to generate colored patterns on a support.

US 2021/0039422 A1 discloses a method for building a security image by multiplexing color images.

US 5,070,413 A discloses a halftoning method for creating a color binary image from a continuous tone color image.

US 2007/0097389 A1 discloses a method of adapting a color gamut of an image to be produced onto a set of colors achievable with a printing technique (gamut mapping).

The present disclosure is directed, at least in part, to improving or overcoming one or more aspects of prior systems.

### Summary of the Disclosure

According to one aspect of the present disclosure, a method of generating a palette for use in a printing process using a printing apparatus comprises the steps of obtaining at least one color value of each of a first plurality of images printed on a substrate surface by varying one or more parameters of the printing apparatus in a color space. The method further comprises selecting a predetermined number of images to be used for generating the palette, determining a set of images including the predetermined number of images and having a maximum color gamut value of all sets of images including the predetermined number of images, and storing the at least one color value of each image in the set of images having the maximum color gamut value in association with the one or more parameters used to print the image to form the palette.

In another aspect, the present disclosure relates to a method of printing an input image using a palette generated in accordance with the method of the above aspect. The method comprises receiving the input image, retrieving the palette from a memory, performing gamut mapping to map color values of the input image to color values obtainable from the palette, and printing an output image by halftoning using the palette and the gamut-mapped color values of the input image.

In yet another aspect, a method of printing a multiplexed input image that can be observed in a plurality of modes using a palette generated in accordance with the method of the above aspect comprises receiving the multiplexed input image, retrieving the palette from a memory, the palette being a multiplexed palette including a predetermined number of color values in each mode, determining a maximum enclosed box enclosed in a convex hull of the palette in a combined color space, performing gamut mapping to map color values of the input image to color values inside the box, and printing an output image by halftoning using the palette and the gamut-mapped color values of the input image.

In a further aspect, the present disclosure relates to a printing apparatus, preferably a laser marking apparatus, comprising a memory and a control unit configured to perform the method of any one of the preceding aspects.

Other features and aspects of the present disclosure will be apparent from the following description and the accompanying drawings.

### Brief Description of the Drawings

Fig. 1 shows an exemplary range of colors attainable using a printing apparatus,
Fig. 2 shows an example of a reduced color palette generated in accordance with the present disclosure,
Fig. 3 shows an example for an output image generated in accordance with the present disclosure,
Fig. 4 shows an exemplary flow diagram for obtaining a reduced color palette in accordance with the present disclosure,
Fig. 5 is an exemplary illustration of a halftoning process using the color palette in accordance with the present disclosure,
Fig. 6 shows an example of two multiplexed images used in the methods of the present disclosure,
Fig. 7 shows an example of a color space to be used in a multiplexing process in accordance with the present disclosure, and
Fig. 8 illustrates a change of a basis performed in a multiplexing process in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that, in particular when using a laser marking/printing apparatus, there is an interest in selecting a few laser parameters that enable reproducing images in the best way possible, by maximizing the color range obtainable from a selected palette. This can be achieved by using empirical measurements of color patches made with the laser marking apparatus, and automatically selecting a color palette from a database of the printed color patches to maximize the quality of image reproduction with the laser marking apparatus.

In particular, it has been realized that the palette should maximize the range of colors accessible by techniques such as halftoning of the colors of the palette. The colors of the palette are then used to reproduce the images with the laser marking apparatus, for example, by vector error diffusion halftoning or the like.

In particular, it has been realized that the palette should be selected such that a color gamut of the same in a given color space is maximized. In this respect, it has also been realized that gamut mapping may be used to adapt the colors of any image to the colors reproducible by the generated palette. Here, the gamut description that is used for the gamut mapping can also be used to adapt the computation of the color gamut in the respective color space.

To reproduce the color image from the selected palette, for example, an appropriate halftoning technique such as vector error diffusion can be used. Here, it has been realized that the best color palette can depend on the halftoning technique that is used, as the range of accessible colors might be limited by a particular technique. In particular, it has been realized that some colors might generate a visible texture when obtained with the selected halftoning technique. In such a case, it may be desirable to exclude these colors. This can be modeled and also taken into account when computing the color gamut.

It has also been realized that the automatic selection of the best possible palette can be extended to image multiplexing. In this respect, it has been realized that, in order to achieve the best possible contrast in each mode, and in order to avoid distortions such as ghost images, the gamut mapping and the halftoning technique based on the same have to be adapted. This is achieved by selecting an appropriate region in the combined color space defined by the colors in the different modes. For example, in a three-dimensional combined color space, a rectangular cuboid fitted inside the convex hull of the obtainable colors with a maximum volume is determined as the region of the combined color space. Gamut mapping of the colors of the multiplexed input image is then performed with respect to said region.

In the context of multiplexing of images, it has also been realized that the image quality can be improved by performing a change of bases, optionally in combination with a dimensionality reduction. This can allow for maximizing the volume of the convex hull that can be covered by an axis-aligned box or cuboid. In combination with a projection in order to reduce the dimensionality of the data, this can also maximize the color variance that is retained. Further, it reduces the complexity of the problem and the difficulty of the multiplexing condition. One possibility for performing the change of basis and the dimensionality reduction is the use of a principal component analysis (PCA).

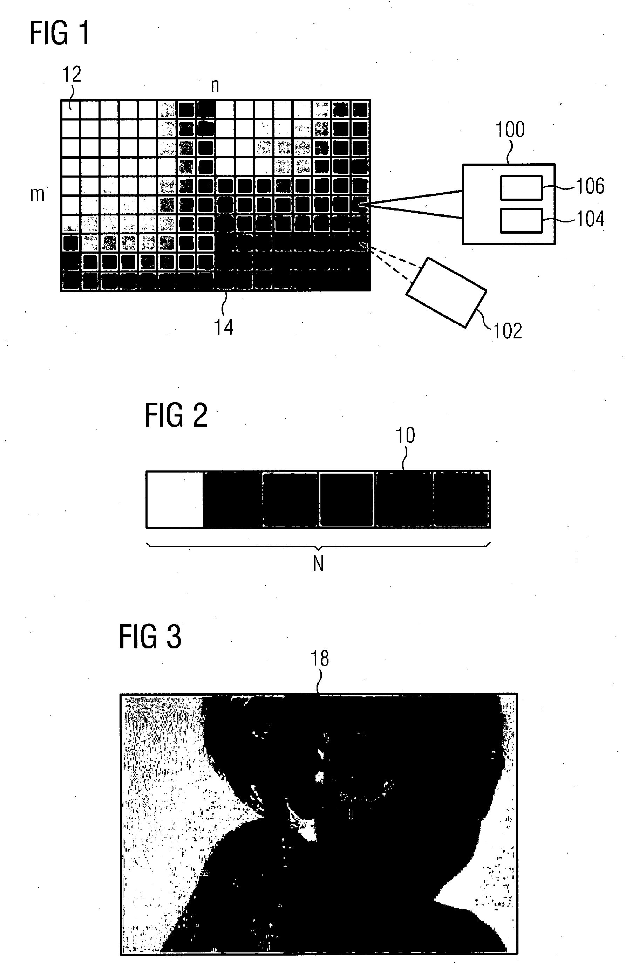

Fig. 1 shows an example of a color palette (in the following, simply referred to as "palette") formed by a plurality of images 12 printed by a printing apparatus 100, in particular, a laser marking apparatus. Printing apparatus 100 is configured to irradiate a substrate surface 14 of a substrate with laser light to modify material on substrate surface 14. As shown in Fig. 1, printing apparatus 100 includes a control unit 106 and a memory 104, and operates in a known manner to irradiate substrate surface 14 with laser light to modify properties of the same for producing different colors.

In the example shown in Fig. 1, printing apparatus 100 is controlled by control unit 106 to print a first plurality of images 12 having mutually different, uniform color values on substrate surface 14 by varying one or more parameters of printing apparatus 100. In particular, in case of printing apparatus 100 being a laser marking apparatus, the parameters may include one or more of: laser power; scanning speed; laser focus; laser spacing; repetition rate; laser polarization; laser wavelength; pulse duration. The material on substrate surface 14 may be a known ink or other coating that reacts to laser light to produce the plurality of different colors.

In some embodiments, one or more of the above-mentioned laser parameters are varied in a stepwise manner to produce the plurality of discrete color values shown in Fig. 1. In the example in Fig. 1, a palette including n × m color values is generated in this manner. Examples for a material that reacts to laser light include, for example, compounds including nanoparticles such as the ones known from WO 2014/075994 A1. In some embodiments, the compound may be a TiO₂ layer including Ag nanoparticles. Of course, any other known material that reacts to laser light and is able to produce different colors can be used. Each different color value in Fig. 1 can be obtained by selecting the appropriate parameters and controlling printing apparatus 100 to irradiate the respective substrate surface with laser light with said selected parameters.

In order to print a desired image, in particular, a color image, it is usually necessary to use image processing techniques such as halftoning, in order to be able to obtain colors that are not directly obtainable by any of the parameters of printing apparatus 100. Such printing techniques are well-known, and a specific one will be described below in more detail.

It will be appreciated that, in principle, all the color values shown in Fig. 1 can be used when printing a desired image. However, if all the different color values were used to print the image, a large number of changes of the parameters of printing apparatus 100 would be necessary. This is generally undesirable, as it increases the time that is required for finalizing the image. Therefore, according to the present disclosure, a method is used for reducing the palette shown in Fig. 1 to a palette that includes only a desired number of color values, said color values resulting in a maximum color gamut volume. Such a palette 10 including a predetermined number N of color values from all the n × m obtainable color values shown in Fig. 1 is illustrated in an exemplary manner in Fig. 2. An exemplary process for obtaining palette 10 will be described in more detail below. As will also be described in more detail below, using palette 10, a desired output image 18 shown in Fig. 3 can be printed by printing apparatus 100, for example, by using a halftoning technique or the like.

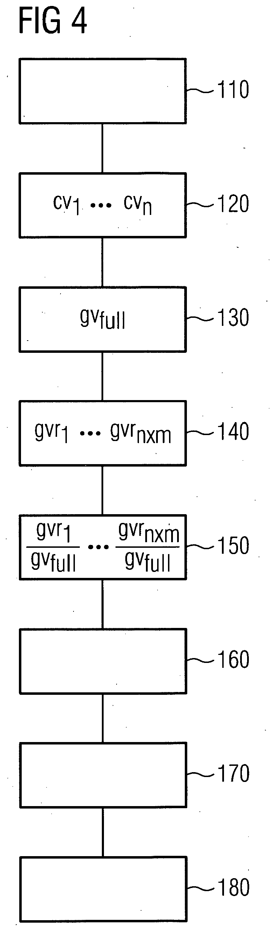

Fig. 4 shows an exemplary flow diagram of a method of generating palette 10 in accordance with the present disclosure. As previously mentioned, in a first step, printing apparatus 100 is controlled to print the first plurality of images 12 shown in Fig. 1. As also previously mentioned, each image 12 has a uniform color value. In this respect, the expression "color value" is to be interpreted broadly, as specifying the color of image 12 in any appropriate color space. For example, the RGB or the CIELAB color space can be used to describe the color of image 12. However, it will also be appreciated that any other appropriate color space could be used. For example, filters or appropriate projections could be applied to obtain the color value of each image 12, for example, in a color space with reduced dimensions such as a one-dimensional or two-dimensional color space. For example, in case of a one-dimensional color space, only the lightness of image 12 could be used, or in case of a two-dimensional color space, a chromaticity plane with a fixed luminance value or only the R and G values (with a fixed B value) could be used to describe the color of image 12. It will be appreciated that, generally, the "color value" as used herein is not limited to a single number, and can be a vector comprising a plurality of components (for example, R, G and B in case of the RGB color space).

Regardless of the choice of color space, after printing the plurality of images 12 in step 110, at least one color value of each of the first plurality of images 12 in the color space is determined in step 120. For example, as shown in Fig. 1, a color detector 102, for example, a color camera, a colorimeter, a spectrophotometer or any other color measuring device can be used to determine the color of each of the first plurality of images 12. In this manner, a database of obtainable color values cv₁ ... cv_{n×m} in association with the corresponding parameters of printing apparatus 100 is generated.

It will be appreciated that generating the database can be performed in advance in a calibration process of printing apparatus 100. Therefore, the method of generating palette 10 does not have to include the steps of printing the plurality of images 12 and measuring their color values. Instead, the method may only require a step of obtaining the measured color values, together with the associated printing parameters, for example, by retrieving the same from a memory such as memory 104 of printing apparatus 100. In this manner, the database of obtainable colors only needs to be created once, and the method of generating the reduced palette can be adapted to any particular needs associated with a specific printing process. For example, the number of colors in palette 10 can be adapted, or the number of color components to be used can be changed, etc.

In step 130, a full color gamut value (also referred to as color gamut) of the first plurality of images 12 is determined based on the obtained color values. Here, the expression "color gamut value" is to be interpreted broadly as the area or volume (or higher-dimensional volume) including the color values of the first plurality of images 12 in the selected color space. For example, in a two-dimensional space, the color gamut value can be the area of the convex hull in a chromaticity diagram, and in a three-dimensional color space it can be the volume of the convex hull in, for example, the CIELAB color space. The calculation of the respective color gamut values is well-known, such that the details will be omitted herein. Regardless of the dimensions, however, the result will be a number gv_{full} representing the color gamut of all the different images.

In a subsequent step 140, for each image of the first plurality of images 12, a reduced color gamut value of the first plurality of images 12 not including said image is determined in the same manner. In other words, for example, the color gamut value gvr₁ when the color value cv₁ of a first image 12 is not included is calculated. Then, for each image of the first plurality of images 12, a ratio between the reduced color gamut value and the full color gamut value is calculated in step 150. As a result, a number of ratios gvr₁/gv_{full} ... gvr_{n×m}/gv_{full} is obtained. This ratio can be interpreted as specifying the ratio between the gamut volume that remains when a specific color is removed and the full gamut volume. Accordingly, the lower this ratio, the more the corresponding image contributes to the full gamut volume.

Therefore, in order to select a predetermined number N of colors (images), the N images that contribute the most to the gamut volume are selected by determining the images 12 associated with the predetermined number N of smallest ratios of the ratios calculated in step 150. This is done in step 160.

In step 170, the images 12 associated with the predetermined number N of smallest ratios are determined. In the present embodiment, where each image is associated with a single color value (i.e., the image is not a multiplexed image, which has different color values when viewed under different conditions), the corresponding ratios can be directly associated with the respective images. As will be described in more detail below, in case of multiplexed images, this process may be more complicated.

After determining the images associated with the predetermined number N of smallest ratios, in step 180, the color values of the images associated with the predetermined number N of smallest ratios are stored in association with the one or more parameters used to print the same to form reduced palette 10. For example, the color values and the one or more parameters may be stored in memory 104 of printing apparatus 100.

It will be appreciated that the above is merely one example for determining a set of images (color values) including the predetermined number of images and having a maximum color gamut value of all possible different sets of images including the predetermined number of images, and storing the at least one color value of each image in the set of images having the maximum color gamut value in association with the one or more parameters used to print the image to form the palette. In another example, all possible sets (i.e., combinations) of images including the predetermined number of images can be determined, and for each set or combination, the color gamut value can be determined. Then, the set having the largest color gamut value out of all possible sets is determined as the set of images to be used for forming the palette.

In the above process, optional steps of selecting a halftoning technique to be used in the printing process, and determining the full color gamut value and the reduced color gamut values based on the selected halftoning technique may be included. The reason for this is that, in general, the halftoning technique that is to be used in the printing process has an effect on the colors that are obtainable with the primary colors in the palette shown in Fig. 1. In this respect, it is important to note that the respective color gamut values are not solely calculated based on the primary colors, but based on all colors obtainable using said primary colors, for example, by performing halftoning. However, in some embodiments, it is also contemplated to calculate the color gamut values based on only the primary colors directly obtainable by printing apparatus 100.

As will be described in more detail below with respect to a printing process using the generated palette 10, it may be advantageous to perform gamut mapping of the input image to be printed. Here, the gamut mapping involves using a gamut description to perform the same. Said gamut description may also affect the calculation of the full color gamut value and the reduced color gamut values. Therefore, optional steps of selecting a gamut description to be used in a gamut mapping process, and determining the full color gamut value and the reduced color gamut values based on the selected gamut description may be included.

In some embodiments, the predetermined number N of smallest ratios, i.e., the predetermined number N of colors to be used for palette 10, may be between 3 and 50, preferably between 6 and 16, but in other embodiments it can also be more than 50. In this manner, a processing time for printing the images can be reduced significantly when compared to the case where a palette including all obtainable colors (e.g., several hundred or more than a thousand colors) is used to print the images.

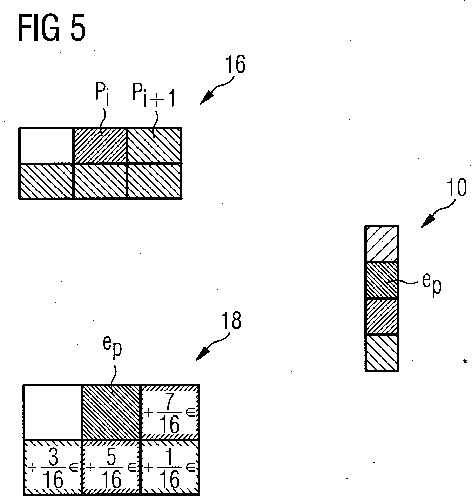

Using palette 10 generated in the above-described manner, a subsequent printing process of an input image 16 (part of which is shown in Fig. 5) can be performed in the following manner: In a first step, input image 16 is received by printing apparatus 100. Then, palette 10 is retrieved from a memory such as memory 104 of printing apparatus 100. Palette 10 was previously generated in accordance with the methods disclosed herein and includes a predetermined number N of colors obtainable by printing apparatus 100 and to be used for the printing. As previously mentioned, palette 10 can be newly created based on the database of all obtainable colors, for example, for a given number of printing operations or even for a single printing operation involving a single input image. In this manner, it may be possible to select the optimum reduced palette 10 for a given input image depending on the properties of the same.

In the next step, gamut mapping is performed on input image 16 to map color values of input image 16 to color values obtainable from palette 10. The process of gamut mapping is known, for example, from US 2007/0097389 A1, such that the details will be omitted herein. Generally, the gamut mapping can be understood as mapping the color values of input image 16 to corresponding color values that are inside the gamut description (e.g., the convex hull or other mathematical shapes) defined or spanned by the colors in palette 10 (including, for example, colors which can be obtained by a selected halftoning process). The result of this process is that color values that are outside of the range obtainable with palette 10 are mapped to color values that are obtainable with said palette.

After gamut mapping of the color values of input image 16, an output image 18 is printed by halftoning using palette 10 and the gamut-mapped color values of input image 16. Halftoning techniques are also well-known, such that details of the same will be omitted. For the sake of illustration, one technique, which is known as "vector error diffusion" (see also US 5,070,413 A) will be briefly described with reference to Fig. 5.

As shown in Fig. 5, a color value of a pixel pᵢ of input image 16 is compared to the color values of each entry in palette 10, to determine the best match. Here, the skilled person immediately recognizes how the best match can be determined, namely, by determining the entry in palette 10 that has the least distance from the color value of pixel pᵢ in the selected color space using an appropriate metric. For example, entry eₚ may be determined as the best match in palette 10 for pixel pᵢ. Then, the color value of entry eₚ is used as the color value of the pixel corresponding to pixel pᵢ in output image 18. Again, it will be appreciated that the color value can be any multi-dimensional value (vector), depending on the color representation that is used. For example, the color value eₚ could be a three-component vector with components Rₚ, Gₚ and Bₚ in case of the RGB color space.

Generally, there will be a deviation between the color value of palette 10 and the color value of the input image for each pixel. To diffuse this error, an error vector ε is defined as the difference between the color value of the pixel of the input image and the color value of the entry in palette 10. For example, in RGB color space, the vector has components R-Rₚ, G-Gₚ, B-Bₚ. This error vector is then added to the color values of subsequent pixels pᵢ₊₁, ... in input image 16. For example, 7/16 ε is added to the color value of pixel pᵢ₊₁, where ε is the error vector. The color value resulting from the color value of pixel pᵢ₊₁ of input image 16 and the added error vector then forms the basis for determining the best match between the color value of the input image and the color values in palette 10. The process will then be repeated to obtain output image 18 that includes only color values that are present in palette 10. As a result, output image 18 can be obtained using the reduced palette.

The above-described methods can also be used in connection with multiplexing of images. Printing of multiplexed images is particularly advantageous when said images form part of a security feature, for example, of identification documents or the like. Such multiplexed images are formed by pixels having different color values when viewed under different conditions. For example, an image viewed in transmission may have a first appearance, and the same image viewed under backside reflection may have a different, second appearance. Multiplexing of such images is known, for example, from US 2021/0039422 A1, such that a detailed description will be omitted herein. In the context of the present application, however, using inks or other compounds thai exhibit such properties, the process of printing all obtainable colors using printing apparatus 100 explained above with reference to Fig. 1 results in that two palettes similar.to the palette shown in Fig. 1 are obtained when the resulting images 12 are viewed under two conditions. Here, it will be appreciated that the number two is only an example, and any obtainable number of different images (3, 4, 5, etc.) may be used in accordance with the present disclosure. For the sake of simplicity, however, in the following, the case of two multiplexed images will be described.

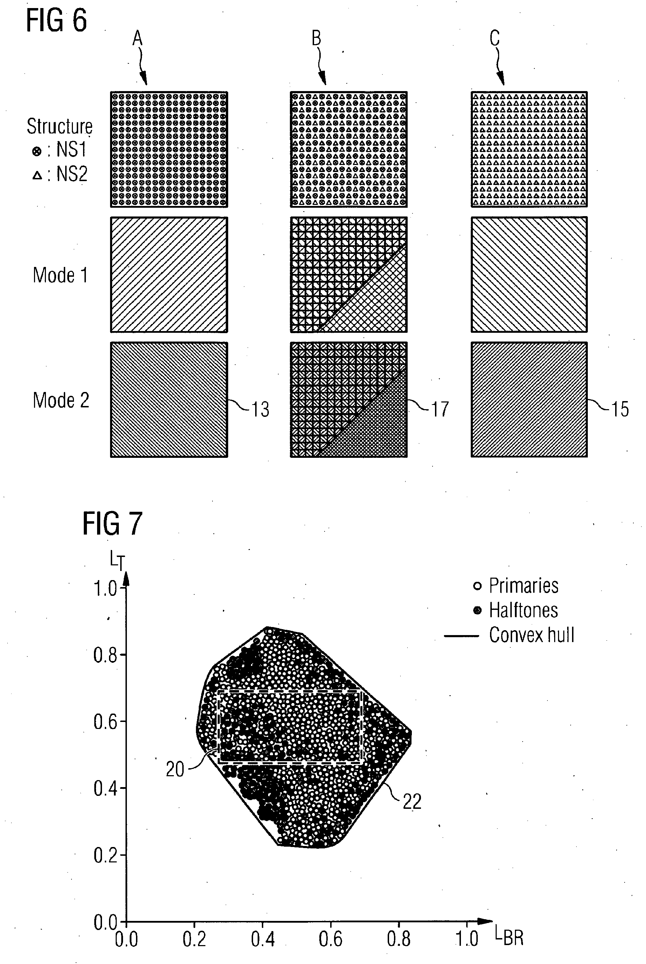

Fig. 6 shows a schematic representation of a first image 13 and a second image 15 of the plurality of images obtained using printing apparatus 100. In Fig. 6, image 13 is obtained using a first set of parameters of printing apparatus 100, and image 15 is obtained using a second set of parameters of printing apparatus 100. When viewed in a first mode (under a first observation condition), each of images 13 and 15 has a first appearance (a respective color value) shown in the second row of Fig. 6, and when viewed in a second mode (under a second observation condition different from the first observation condition), each image has a different appearance (color value) shown in the third row. Intermediate colors in each mode can again be obtained by performing a process such as halftoning, for example, using a checkerboard pattern of the color values of first image 13 and second image 15, as exemplified in the second column of Fig. 6. Here, the last two images shown in the second column of Fig. 6 show the checkerboard pattern on the upper left side, and on the lower right side the color that is observed when viewing the checkerboard pattern from a distance is shown.

In principle, the above-described method of determining a predetermined number N of color values in a reduced palette can be applied to the case of multiplexing of images in a straightforward manner. For example, in case of two RGB images to be multiplexed, for each image 12, a six-dimensional color value (the values R, G and B in the first mode and the values R, G and B in the second mode) can be measured using measuring device 102 in the two modes. All measured color values are then used to populate the corresponding combined color space, which in this case is six-dimensional. Further, using an appropriate metric, the above-described color gamut values can be calculated (for example, by performing an appropriate multi-dimensional integration in a known manner). The resulting color gamut values can then again be used to calculate the corresponding ratios, and select the predetermined number N of smallest ratios. Each of said smallest ratios is associated with a particular one of the images 12 printed by printing apparatus 100. In this manner, a reduced multiplexed palette 10 can be obtained and stored, the multiplexed palette including a first color value in a first mode and a second color value in a second mode in association with the corresponding parameters of printing apparatus 100. The resulting palette 10 is then used to print a desired image.

In principle, the printing of the multiplexed image could be performed in an analogous manner as the printing described above with respect to the non-multiplexed images. In other words, the steps of gamut mapping and halftoning could be extended in a straightforward manner to the multiplexed case. However, it is important to realize that the two modes are not completely independent. In other words, when gamut mapping is performed for the colors in the first mode, this may result in that the corresponding colors in the second mode are not inside the reproducible gamut. This may result in artifacts and ghost images in the multiplexed image. Therefore, a further step is necessary to avoid such artifacts. This will be described below in a first illustrative example in which two monochrome images are multiplexed.

As shown in Fig. 7, in case of two monochrome images, only a single color value (lightness) is present in each of the modes. In other words, for each image, a lightness L_{T} in a first mode such as transmission is measured, and a second lightness L_{BR} is determined for a second mode such as backside reflection. The resulting color space is a two-dimensional space, as shown in Fig. 7. Here, the measurement results of all the colors (primaries) obtainable by a given printing apparatus 100 are shown as white circles. In addition, the colors obtainable by halftoning of the primaries are shown as hatched circles in Fig. 7. Together, the primaries and the halftones define the convex hull 22 containing all obtainable colors. Here, it is immediately evident that, for a given color value in the first mode (for example, L_{T}=0.6), only a subset of color values in the second mode (L_{BR}) can be obtained. In order to be able to successfully multiplex the two images without forming ghost images, a lightness range has to be found for which all lightness pairs are obtainable (for example, by performing appropriate gamut mapping). It is immediately recognized that this is the case for any rectangle that is inside the convex hull 22. Further, it is also recognized that the area of the rectangle is the geometrical mean of the maximum contrast attainable in each mode. Therefore, it follows that maximizing the area of this rectangle allows maximizing the contrast of the produced images. There are several algorithms for finding the maximum area enclosed rectangle inside a given shape of the convex hull (see, for example, the description at http://cgm.cs.mcgill.ca/~athens/cs507/Projects/2003/DanielSud/).

Therefore, in case of multiplexing, the printing process includes, after the steps of receiving the multiplexed input image 16, and retrieving palette 10 from memory 104, the step of determining a maximum enclosed box 20 enclosed in convex hull 22 of palette 10 in the combined color space defined by palette 10. After this maximum enclosed box has been found, gamut mapping of the color values of input image 16 to color values inside box 20 is performed. In this manner, it can be assured that all pairs of color values of the two multiplexed images can be obtained using the reduced palette. Based on this, output image 18 can be printed by halftoning using palette 10 and the gamut-mapped color values of input image 16. This can be done, for example, by a straightforward extension of the exemplary halftoning process described above with respect to Fig. 5 to the dimensions of the combined color space.

In case of higher dimensions, for example, a first image being a monochrome image and a second image having a two-dimensional color value, the resulting combined color space will be a three-dimensional space. In that case, however, a range of possible color values in the subspace defined by the two-dimensional color values is not necessarily a rectangle. The rectangle, i.e. the enclosed box mentioned above, is only an approximation, and the optimization of more complex shapes is a difficult problem. In addition, multiplexed gamut mapping for such complex shapes is also not straightforward.

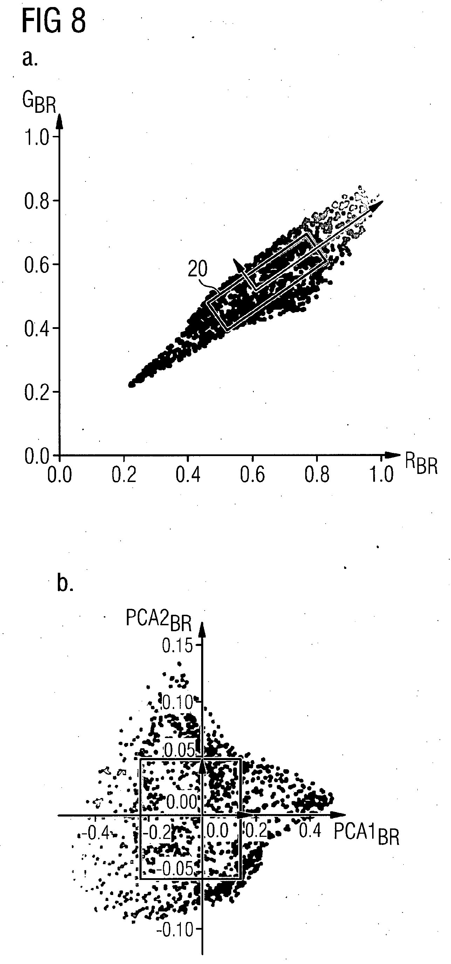

It has been found that the above can be solved by performing a change of basis, optionally in combination with a dimensionality reduction. This will be described below for a further example with reference to Fig. 8. In the example, the first image is a monochrome image described by a color value indicating lightness such as L_{T}. The second mode is a two-dimensional color image described by color values G_{BR} and R_{BR} (with fixed color value B_{BR}). Fig. 8a shows the projection of the multiplexed color values onto a plane having a given lightness L_{T}. In addition, Fig. 8a also shows box 20 defining the maximum enclosed box for the given lightness value L_{T}. As can be seen in Fig. 8, the box is no longer aligned with the axes of the color space. While there are algorithms to find boxes that are not axis-aligned, said algorithms scale poorly with the number of dimensions. Therefore, it is preferable to perform a change of basis in each separate color space to maximize the volume of the convex hull that can be covered by an axis-aligned box. This can be coupled with a projection in order to reduce the dimensionality of the data. There are several algorithms for performing such a change of basis and dimensionality reduction. PCA is the most common algorithm. PCA finds orthogonal axes to represent the data based on the eigenvectors of its covariance matrix. For example, when applying PCA to the R and G colors of the palette, the axes found can be described as PCA1_{BR} = - 0.82R_{BR} - 0.58G_{BR} and PCA2_{BR}= 0.57R_{BR} - 0.82G_{BR}. The resulting axes are shown in Fig. 8b. From Fig. 8, it is evident that performing the change of basis allows finding a larger (three-dimensional) box in the (L_{T}, PCA1_{BR}, PCA2_{BR}) space. Therefore, it is preferable to perform the basis transformation before performing the gamut mapping. Of course, this also requires transforming the image to be multiplexed to the PCA basis before performing the gamut mapping.

To perform the dimensionality reduction, PCA or a similar technique must be applied directly to the original palette images. This is done independently for each mode. When applied to the full color space, up to three eigenvectors will be found, and dimensionality reduction is obtained by ranking the eigenvectors by their variance, and choosing the first or the two first ones. Proceeding in such a manner also allows for reducing the dimensions of, for example, the six-dimensional color space resulting from multiplexing of two full color images to a three-dimensional color space defined by, for example, the palette in the first mode projected onto a single axis PCA0, and the palette in the second mode projected onto the first two axes PCA1' and PCA2'.

It will be appreciated that the above formalism for multiplexed images can be generalized to higher dimensions, and is not limited to the case where the combined color space is a two- or three-dimensional space. In any case, if the change of basis, perhaps in combination with the dimensionality reduction, is applied, it follows that the steps of reducing the number of colors in the palette have to be performed in the multiplexed space after changing the basis. Therefore, in the method for generating the palette in case of a multiplexed image, a further step of reducing a number of dimensions of the combined color space by appropriate processing of the color values in each of the plurality of modes is present. It will be appreciated that the reduction of the number of dimensions can also be used independently from the change of basis mentioned above. In other words, the number of dimensions can also be reduced to obtain a lower-dimensional combined color space, and the maximum enclosed box can be determined in the color space having the reduced dimensions in a straightforward manner.

In other cases, however, the method further comprises performing a change of basis in at least one (or each) of the plurality of modes, and transforming the color values in the at least one (or each) of the plurality of modes to the changed basis. Then, the full color gamut value and the reduced color gamut values are calculated in the combined color space defined by the changed basis. In some embodiments, the above can be achieved by performing a principal component analysis in each of the plurality of modes, optionally in combination with reducing the number of dimensions, to obtain the combined color space.

As a result, the reduced multiplexed palette is obtained either in the color space after the change of basis, or the original color space. In order to obtain the multiplexed palette, however, it is necessary to transform the colors determined in the color space after the change of basis back to the original color space.

Accordingly, a method of printing a multiplexed input image using a palette generated in accordance with the methods disclosed herein comprises the step of receiving the multiplexed input image, retrieving palette 10 from memory 104, palette 10 being a multiplexed palette including a predetermined number of color values in each mode, and determining a maximum enclosed box 20 enclosed in convex hull 22 of palette 10 in the combined color space. The method further includes performing gamut mapping to map color values of input image 16 to color values inside box 20, and printing output image 18 by halftoning using palette 10 and the gamut-mapped color values of input image 16.

In case a change of basis is performed, the method further comprises transforming color values of input image 16 in each mode to respective bases forming the combined color space prior to performing the gamut mapping to obtain gamut-mapped color values. In other words, the color values of the input image have to be transformed to the combined color space after the transformation, the convex hull in the transformed space is defined by the transformed color values of the reduced multiplexed palette, and the maximum enclosed box 20 is determined in the combined color space after transformation. Then, gamut mapping is performed in the combined color space after transformation to map color values of the input image to color values inside the box. The gamut-mapped color values of the input image are then transformed back to the original color values, and halftoning is performed using the palette 10 and the transformed gamut-mapped color values in the original color space.

### Industrial applicability

With the above-described methods, one or more input images can be printed using a reduced palette including a predetermined number of colors obtainable by a printing apparatus. Preferably, the input image includes at least one color image, and the printing is performed using a laser marking apparatus. In this manner, for example, security features forming part of an identification document or the like can be laser printed using a reduced number of laser parameters associated with the colors in the reduced palette. This scheme can also be applied to multiplexed images, with special care to be taken to avoid the appearance of ghost images or other image distortions.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. A method of generating a palette (10) for use in a printing process using a printing apparatus (100), the method comprising:
obtaining (120) at least one color value of each of a first plurality of images (12) printed on a substrate surface (14) by varying one or more parameters of the printing apparatus (100) in a color space;
selecting a predetermined number (N) of images (12) to be used for generating the palette (10);
determining a set of images (12) including the predetermined number (N) of images (12) and having a maximum color gamut value of all sets of images including the predetermined number (N) of images (12); and
storing the at least one color value of each image in the set of images (12) having the maximum color gamut value in association with the one or more parameters used to print the image to form the palette (10).

2. The method of claim 1, wherein the step of determining the set of images (12) having the maximum color gamut value includes:
determining (130) a full color gamut value of the first plurality of images (12) based on the obtained color values;
for each image of the first plurality of images (12), determining (140) a reduced color gamut value of the first plurality of images (12) not including said image and calculating (150) a ratio between the reduced color gamut value and the full color gamut value;
determining (160) the predetermined number (N) of smallest ratios; and
determining (170) the images (12) associated with the predetermined number (N) of smallest ratios as the set of images (12) having the maximum color gamut value.

3. The method of claim 1 or 2, further comprising:
selecting a halftoning technique to be used in the printing process; and
determining the color gamut values based on the selected halftoning technique.

4. The method of any one of claims 1 to 3, further comprising:
selecting a gamut description to be used in a gamut mapping process as part of the printing process; and
determining the color gamut values based on the selected gamut description.

5. The method of any one of claims 1 to 4, wherein the color gamut values are calculated as an area of a convex hull in a chromaticity diagram or another two-dimensional color space, or a volume of a convex hull in a three dimensional color space such as RGB or CIELAB.

6. The method of any one of claims 1 to 5, further comprising:
printing (110) the first plurality of images (12) using the printing apparatus; and
obtaining (120) the color values of the first plurality of images by measurement,
wherein the printing apparatus (10) is a laser marking apparatus, and the parameters include one or more of: laser power; scanning speed; laser focus; laser spacing; repetition rate; laser polarization; laser wavelength; pulse duration.

7. The method of any one of claims 1 to 6, wherein the predetermined number (N) is between 3 and 50, preferably between 6 and 16.

8. The method of any one of claims 1 to 7, wherein each of the images (12) is a multiplexed image that can be observed in a plurality of modes and has different color values in the plurality of modes, the method comprising:
obtaining the color values of each of the plurality of images (12) in the plurality of modes; and
determining the color gamut values in a combined color space defined by the color values in the plurality of modes.

9. The method of claim 8, further comprising:
reducing a number of dimensions of the combined color space by appropriate processing of the color values in each of the plurality of modes.

10. The method of claim 8 or 9, further comprising:
performing a change of basis for at least one of the plurality of modes;
transforming the color values in the at least one of the plurality of modes to the changed basis; and
calculating the color gamut values in the combined color space defined at least in part by the at least one changed basis.

11. The method of claim 10, further comprising:
performing a principal component analysis in the at least one of the plurality of modes, optionally in combination with reducing a number of dimensions, to obtain the combined color space.

12. A method of printing an input image (16) using a palette (10) generated in accordance with the method of any one of the preceding claims, the method comprising:
receiving the input image (16);
retrieving the palette (10) from a memory (104);
performing gamut mapping to map color values of the input image (16) to color values obtainable from the palette (10); and
printing an output image (18) by halftoning using the palette (10) and the gamut-mapped color values of the input image (16).

13. A method of printing a multiplexed input image (16) using a palette (10) generated in accordance with the method of any one of claims 8 to 11, the method comprising:
receiving the multiplexed input image (16);
retrieving the palette (10) from a memory (104), the palette (10) being a multiplexed palette including a predetermined number (N) of color values in each mode;
determining a maximum enclosed box (20) enclosed in a convex hull (22) of the palette (10) in the combined color space;
performing gamut mapping to map color values of the input image (16) to color values inside the box (20); and
printing an output image (18) by halftoning using the palette (10) and the gamut-mapped color values of the input image (16).

14. The method of claim 13, further comprising:
transforming color values of the input image (16) in each mode to respective bases forming the combined color space prior to performing the gamut mapping to obtain gamut-mapped color values;
transforming the gamut-mapped color values of the input image back to the original color values; and
performing halftoning using the palette (10) and the transformed gamut-mapped color values.

15. A printing apparatus (100), preferably a laser marking apparatus, comprising;
a memory (104); and
a control unit (106) configured to perform the method of any one of the preceding claims.
